# EUROPEAN PATENT SPECIFICATION

(11) **EP 3 025 983 B1**
(45) Date of publication and mention of the grant of the patent: **28.12.2016**
(21) Application number: 15196308.9
(22) Date of filing: 25.11.2015
(51) Int. Cl.: B65D 65/46, C11D 17/04, B65D 75/52

(54) **WATER SOLUBLE POUCH**
WASSERLÖSLICHER BEUTEL
SACHET SOLUBLE DANS L'EAU

(30) Priority: 26.11.2014 DE 102014224195
(43) Date of publication of application: 01.06.2016
(73) Proprietor: Henkel AG & Co. KGaA, 40589 Düsseldorf (DE)
(72) Inventor: MEIER, Frank, 40589 Düsseldorf (DE); SUNDER, Matthias, 40593 Düsseldorf (DE)

(56) References cited:
- EP-A1- 2 617 659
- WO-A1-2014/016144
- GB-A- 2 513 199

## Description

The invention concerns a water soluble pouch for holding a unitary dose of product.

### Previous Art

Water soluble pouches are well known in the art. They can have many uses, for instance as unitary doses for laundry washing machines or for dishwashing. The process of production of such mono and multichamber pouches is also well described in the literature. For instance, EP1360110B1 describes a process for producing water soluble pouches on a rotating platen conveyer belt. Exemplary monochamber pouches are described in EP1361172B1. EP1361172B1 describes water soluble pouches having a dome shaped wall which is described as providing mechanical stability.

A water soluble pouch with two chambers is described in WO2014016144.

The state of the art deals mainly with improving stability, because leakages can compromise a complete secondary packaging of pouches, thus providing an unpleasant experience for the consumer. For that reasons much effort was taken by the industry in providing robust mono or multichamber pouches.

Due to the robustness, these pouches tend to take some time to dissolve. However, with the use of always better washing and/or cleaning product formulations, and washing methods using less water, less power and being faster, it is necessary to dispense the products without delay. While some improvements of the state of the art are towards better water soluble films, it is still desired to obtain a better release of products from multi-chamber pouches in the washing environment.

### Problem of the Invention

The problem of the invention is thus to provide a multi-chamber water soluble pouch with improved characteristics.

This problem is solved by providing a water soluble pouch according to the features of claim 1, and a method for washing fabrics according to claim 10. The dependent claims ideal with further developments of the invention.

The present invention concerns a water soluble pouch comprising:
(i) a first film;
(ii) a second film overlapping with the first film;
(iii) a seam in which the first film is joined to the second film,
wherein the seam comprises a first closed path within which space between the first film and the second film defines a first chamber for holding product. The seam further comprises a second closed path within which space between the first film and the second film defines a second chamber for holding product. The seam also comprises a weakened line; and the thickness of the weakened line is less than the thickness of each of the first film and the second film combined so that the weakened line dissolves first when in contact with water, separating the first chamber from the second chamber.

Preferably, at least the first closed path comprises a weakened line, so that the first chamber can be completely separated from the seam when in contact with water.

In one variant of the invention, the second closed path comprises a second weakened line, so that the second chamber can be completely separated from the seam when in contact with water. Preferably, at least the first and the second closed path comprise each its correspondent weakened line. This is easier to achieve during production and therefore quality and yield are higher.

Preferably the second chamber (5) has a higher density than the first chamber. Preferably, the second chamber has a density higher than water. Alternatively or in addition, the first chamber (4) has a lower density than water.

In one embodiment it is foreseen that the second chamber comprises a solid product, preferably a powder and/or granulate and is perforated and comprises a powder which is not able to flow out of the perforations.

It is preferred that the first chamber comprises a concave section, and the second chamber comprises a convex section which extends into the concave section of the first chamber. This encompasses also a pouch in which the first chamber has the shape of a closed tube which surrounds the second chamber. As an example the second chamber could be disc like and be made within the inner circle of a ring shaped outer chamber, thus looking like a swim ring.

### Pouch

The Pouch according to the present invention is water soluble, meaning that the first and second film react with water until they disappear releasing the pouches content, i.e. the product. The pouch is multi-chamber, meaning it has at least two chambers for holding product.

The pouch is formed by a first film and a second film overlapping with the first film. The films are joined together, the join area is called seam. The seam comprises a first closed path within which space between the first film and the second film defines a first chamber for holding product. The seam further comprises a second closed path within which space between the first film and the second film defines a second chamber for holding product. Thus, in each case the product is held in a chamber defined by the first film and the second film which are joined together as closed path by the seam. The preferred method of production is explained further below.

### Film

The first film and second film each preferably comprises a form of polyvinyl alcohol, or derivatives thereof, which can easily dissolve in water. Such films are available, for example, from Mondi, Monosol, Nippon Gohsei, Aicello, Aquafilm, Kuraray.

### Product

The product contained in the pouch may be liquid or solid. Liquid includes low viscosity liquids (< 10mPas), high viscosity liquids (>10mPas), pasteous or gel like formulation, preferably flowable under normal pressure at 20°C. The following are examples of solid products: powder, granulate, compressed granulate, tab, solidified melt. Preferably the solid is a granulate, this gives a faster dispersion and dissolution in water.

The viscosity is the shear viscosity measured at 10 Hz under normal ambient pressure at 20°C. Preferably, the products of each chamber together form a laundry composition.

A preferred laundry composition comprises at least one solid composition as a product and at least one liquid composition as a product, whereas said at least one liquid composition and the at least one solid composition reside in different chambers of the pouch of this invention.

It is highly preferred that the solid composition comprises a total amount of 0 to 5 wt.% surfactant.

A particularly preferred pouch according to this invention comprises
a) in the first chamber a product in the form of a liquid composition, comprising related to the total weight of said liquid composition
   - a total amount of 25 to 60 wt.-% of at least one anionic surfactant and
   - a total amount of 2 to 35 wt.-% of at least one nonionic surfactant,
   or/and
b) in the second chamber a product in the form of a a solid composition, comprising related to the total weight of said solid composition
   - a total amount of 25 to 55 wt.-% of at least one peroxide compound,
   - a total amount of 2 to 25 wt.-% of at least one organic bleach activator,
   - a total amount of 0 to 5 wt.-% surfactant.

A most preferred pouch according to this invention comprises a) and b).

Matter (e.g. a compound or a composition) is defined as a liquid, if it is in the liquid state at 25°C, 1013 mbar.

Matter (e.g. a compound or a composition) is defined as a solid, if it is in the solid state at 25°C, 1013 mbar.

A chemical compound is defined to be an organic compound, if said compound comprises a covalent bond between carbon and hydrogen. Said definition for example holds for organic bleach activators.

A chemical compound is defined to be an inorganic compound, if said compound does not comprise a covalent bond between carbon and hydrogen. Said definition for example holds for inorganic peroxide compounds.

A peroxide compound is a chemical compound, which comprises the peroxy-structural unit -O-O- in the molecule. A preferred solid composition comprises a total amount of 30 to 50 wt.%, particularly preferred from 33 to 45 wt.% peroxide compound.

The solid composition preferably comprises above defined total amounts (and preferred total amounts) of at least one inorganic peroxide compound.

Suitable peroxide compounds are especially percarbonate compounds, perborate compounds, peroxodisulfate compounds, hydrogen peroxide, addition compounds of hydrogen peroxide with inorganic compounds, organic peracids and mixtures thereof. It is preferred to select the peroxy compound from sodium percarbonate, sodium perborate, sodium peroxodisulfate or mixtures thereof. Sodium percarbonate is particularly preferred. Sodium percarbonate is an addition compound of hydrogen peroxide with sodium carbonate and obeys the formula y Na₂CO₃ · x H₂O₂, whereas x is the molar amount of hydrogen peroxide per y mole of Na₂CO₃. Most preferred is sodium percarbonate with the formula Na₂CO₃·1.5 H₂O₂ (CAS-number 15630-89-4).

The peroxide compound used according to this invention preferably has an amount of active oxygen between 9,0 and 15,0 %, especially from 10 to 14 % (determined by titration with potassium permanganate respectively).

A particularly preferred peroxide compound comprises of particles of a solid, e.g. a granulate or a powder, and said particles have a bulk density of 0,70 to 1,30 kg/dm³, especially of 0,85 to 1,20 kg/dm³ (determined using ISO 697 respectively).

Furthermore it is preferred to use a peroxide compound having a mean particle size (volume weighted) X_{50,3} of 0,40 to 0,95 mm, especially from 0,50 to 0,90 mm (e.g. determined by mesh analysis or with a particle size analyser "Camsizer" of company Retsch).

A bleach activator is a chemical compound enhancing the bleaching capability of the peroxide compound.

The solid composition of said pouch comprises preferably a total amount of bleach activator of 11 to 18 wt%, more preferred 12 to 16 wt.%, even more preferred 10 to 15 wt%, and most preferred 11 to 14 wt.%.

Preferred organic bleach activators yield via perhydrolysis organic peroxy acids, especially aliphatic organic percarboxylic acid with preferably 1 to 10 carbon atoms (more preferably 2 to 4 carbon atoms) and/or perbenzoic acid derivatives.

Solid compositions, comprising an organic bleach activator selected from at least one compound, which is capable of forming via perhydrolysis an aliphatic percarboxylic acid, are preferred. It is particularly preferred to select at least one organic bleach activator from N-acylated organic amine compounds. Said before mentioned total amounts are also preferably valid for said preferred organic bleach activators.

The perhydrolysis reaction is a known chemical reaction. During perhydrolysis the anion -O-O-H covalently binds via nucleophilic substitution at reactant R-X yielding the compound R-O-O-H, while a leaving group X⁻ separates by breaking the covalent bond between R and X.

Most preferred organic bleachactivators are selected from multi acetylated alkylene diamines, especially tetraacetyl-ethylenediamine (TAED), acylated triazine compounds, especially 1,5-diacetyl-2,4-dioxohexahydro-1,3,5-triazine (DADHT), acyated glykoluriles, especially tetraacetylglykoluril (TAGU), N-acylimides, especially N-nonanoylsuccinimide (NOSI), acylated phenol sulfonates, especially n-nonanoyloxy- or isononanoyloxy-benzene sulfonate (n- bzw. iso-NOBS). Said before mentioned total amounts are also preferably valid for said preferred organic bleach activators.

Most preferred solid compositions of the pouch comprise as a bleaching system
- a total amount of 25 to 55 wt.-% (especially 30 to 50 wt.-%) of at least one inorganic peroxide compound (especially of sodium percarbonate), and
- a total amount of 10 to 20 wt.-% of at least one organic bleach activator, selected from at least one compound, which is capable of forming via perhydrolysis an aliphatic percarboxylic acid ( especially selected from at least N-acylated organic amine).

It is particularly preferred, if the total amount of surfactant of said solid composition is 0 to 4 wt.%, more preferred 0 to 0,5 wt.%, related to the total weight of said solid composition respectively. Most preferred the solid composition is surfactant free.

If surfactant is present in the solid composition it is an advantage use at least one soap. Soap is defined as the sodium or potassium salts of saturated or unsaturated fatty acids with 10 to 20 carbon atoms, of resin acids of colophony and of naphthenic acids. Sodium or potassium salts of fatty acids with 10 to 20 carbon atoms, especially with 12 to 18 carbon atoms, are particularly preferred soaps.

The liquid composition of said pouch comprises preferably at least one anionic surfactant and at least one nonionic surfactant. Particularly preferred said surfactants are comprised in above mentioned total amounts in the liquid composition of said pouch.

Suitable anionic surfactants comprise alkylbenzenesulfonic acid salts, olefinsulfonic acid salts, C12-18 alkanesulfonic acid salts, salts of sulfuric acid monoesters with a fatty alcohol, a fatty acid soap, salts of sulfuric acid monoesters with an ethoxylated fatty alcohol or a mixture of two or more of these anionic surfactants. Among these anionic surfactants, alkylbenzenesulfonic acid salts, fatty acid soaps, salts of sulfuric acid monoesters with an ethoxylated fatty alcohol and mixtures thereof are more preferred.

The total amount of anionic surfactant is preferably from 30 to 40 wt.% related to the total weight of the liquid composition.

Surfactants of the sulfonate type which may here preferably be considered are C9-13 alkylbenzenesulfonates, olefinsulfonates, i.e. mixtures of alkenesulfonates and hydroxyalkanesulfonates and disulfonates, as are obtained, for example, from C12-18 monoolefins with a terminal or internal double bond by sulfonation with gaseous sulfur trioxide and subsequent alkaline or acidic hydrolysis of the sulfonation products. C12-11 alkanesulfonates and the esters of α-sulfofatty acids (ester sulfonates), for example the α-sulfonated methyl esters of hydrogenated coconut, palm kernel or tallow fatty acids, are also suitable.

Preferred alk(en)ylsulfates are the salts of sulfuric acid semi-esters of C12-C18 fatty alcohols for example prepared from coco fatty alcohol, tallow fatty alcohol, lauryl, myristyl, cetyl or stearyl alcohol or C10-C20 oxo alcohols and those semi-esters of secondary alcohols of these chain lengths. C12-C16 alkylsulfates and C12-C15 alkylsulfates and C14-C15 alkylsulfates are preferred because of their washing characteristics. 2,3-Alkylsulfates are also suitable anionic surfactants.

The sulfuric acid monoesters of straight-chain or branched C7-21 alcohols ethoxylated with 1 to 6 mol of ethylene oxide are also suitable, such as 2-methyl-branched C9-11 alcohols with on average 3.5 mol ethylene oxide (EO) or C12-18 fatty alcohols with 1 to 4 EO.

Fatty acid soaps are further suitable anionic surfactants. Saturated and unsaturated fatty acid soaps are in particular suitable, such as the salts of lauric acid, myristic acid, palmitic acid, stearic acid, (hydrogenated) erucic acid and behenic acid and in particular soap mixtures derived from natural fatty acids, for example coconut, palm kernel, olive oil or tallow fatty acids.

The anionic surfactants including the fatty acid soaps may be present in the form of the sodium, potassium, magnesium or ammonium salts thereof. The anionic surfactants are preferably present in the form of the sodium or ammonium salts thereof. Amines usable for neutralization to yield ammonium salts are preferably choline, triethylamine, monoethanolamine, diethanolamine, triethanolamine, methylethylamine or a mixture thereof, wherein monoethanolamine is preferred.

A particularly preferred liquid composition comprises at least one anionic surfactant and at least one nonionic surfactant. Preferably the liquid composition comprises above mentioned amounts of anionic and nonionic surfactant respectively.

Suitable nonionic surfactants include alkoxylated fatty alcohols, alkoxylated fatty acid alkyl esters, fatty acid amides, alkoxylated fatty acid amides, polyhydroxyfatty acid amides, alkylphenol polyglycol ethers, amine oxides, alkyl polyglucosides and mixtures thereof.

Preferably used alkoxylated fatty alcohols are ethoxylated, in particular primary alcohols with preferably 8 to 18 C atoms and on average 4 to 12 mol ethylene oxide (EO) per mol alcohol, in which the alcohol residue is linear or branched. In particular, alcohol ethoxylates with 12 to 18 C atoms, for example prepared from coconut, palm, tallow fat or oleyl alcohol, and on average 5 to 8 EO per mol of alcohol are preferred. Preferred ethoxylated alcohols include, for example, C₁₂₋₁₄ alcohols with 4 EO or 7 EO, C₉₋₁₁ alcohol with 7 EO, C₁₂₋₁₈ alcohols with 5 EO or 7 EO and mixtures of these. The stated degrees of ethoxylation are statistical averages which, for a specific product, may be an integer or a fractional number. Preferred alcohol ethoxylates have a narrow homologue distribution (narrow range ethoxylates, NRE). In addition to these nonionic surfactants, fatty alcohols with more than 12 EO may also be used. Examples of these are tallow fatty alcohol with 14 EO, 25 EO, 30 EO or 40 EO. Nonionic surfactants containing EO and PO groups together in one molecule may also be used according to the invention. A mixture of a (relatively highly) branched ethoxylated fatty alcohol and an unbranched ethoxylated fatty alcohol, such as for example a mixture of a C₁₆₋₁₈ fatty alcohol with 7 EO and 2-propylheptanol with 7 EO, is furthermore suitable.

The total amount of nonionic surfactants is preferably 18 to 28 wt.% related to the total weight of liquid detergent composition.

A particularly preferred liquid composition comprises related to the total weight of liquid detergent
- a total amount of 25 to 60 wt.-% (especially 30 to 40 wt.%) anionic surfactant, and
- a total amount of 2 to 35 Gew.-% (especially 18 to 28 wt.%) nonionic surfactant, whereas at least one alkoxylated alcohol with 8 to 18 carbon atoms and 4 to 12 mol ethyleneoxide (EO) per mole of said alcohol.

A most preferred liquid composition comprises related to the total weight of liquid detergent
- a total amount of 25 to 60 wt.-% (especially 30 to 40 wt.%) anionic surfactant, whereas at least C₉₋₁₃-alkylbenzene sulfonate is comprised, and
- a total amount of 2 to 35 Gew.-% (especially 18 to 28 wt.%) nonionic surfactant, whereas at least one alkoxylated alcohol with 8 to 18 carbon atoms and 4 to 12 mol ethyleneoxide (EO) per mole of said alcohol.

A most preferred pouch according to this invention comprises
a) in the first chamber a product in the form of a liquid composition, comprising related to the total weight of said liquid composition
   - a total amount of 25 to 60 wt.-% (especially 30 to 40 wt.%) anionic surfactant, and
   - a total amount of 2 to 35 Gew.-% (especially 18 to 28 wt.%) nonionic surfactant, whereas at least one alkoxylated alcohol with 8 to 18 carbon atoms and 4 to 12 mol ethyleneoxide (EO) per mole of said alcohol.
   and
b) in the second chamber a product in the form of a solid composition, comprising related to the total weight of said solid composition
   - a total amount of 25 to 55 wt.-% (especially 30 to 50 wt.-%) of at least one inorganic peroxide compound (especially of sodium percarbonate), and
   - a total amount of 10 to 20 wt.-% of at least one organic bleach activator, selected from at least one compound, which is capable of forming via perhydrolysis an aliphatic percarboxylic acid ( especially selected from at least N-acylated organic amine),
   - a total amount of 0 to 5 wt.-% surfactant.

### Seam

Seam is made by sealing as explained further below. Another word for seam is sealing region.

The thickness (12) of the seam (8) is the thickness of the first and second film joined together after the sealing process step, which is typically less than the sum of the nominal thicknesses of the first film and second film before the sealing process step. For example the first film (6) and the second film (7) can each have a thickness of 100µm when delivered, usually in a roll. Then the superposed films in the seam area, before the seam is formed, have a total thickness of 200µm, after joining the films together, for example by heating and pressing them together melt-joining them, the final thickness, which is the thickness of the seam (12), may be 150µm, due to the applied pressure. The skilled in the art would understand that the seam is a tight sealing such that the chamber is able to hold product in the chamber; for the avoidance of doubt, the seam most preferably does not have stitches.

### Weakened line

The seam also comprises a weakened line. The weakened line is characterized by a line in the seam in which can dissolve first when in contact with enough water, optionally that line can be used to tear the pouch apart. In the most preferred embodiment for the weakened line, the thickness of the weakened line is less than the thickness of each of the first film and the second film combined so that the weakened line dissolves first when in contact with water, separating the first chamber from the second chamber. In an example, a thickness profile extending from the first chamber to the second chamber would have the thickness of the seam, a trench which is part of the weakened line and as a lower thickness than the thickness of the seam (the thickness of the weakened line), followed by the thickness of the seam. Preferably, the weakened line is continuous and uninterrupted; the continuity gives the best separation of the first and/or second chamber. Uninterrupted means that there is no through hole in the weakened line, this assures that the pouch is still resistant enough to normal handling.

The trench of the weakened line can be formed on both sides of the seam, or it can also be formed on one side as only. It can be more or less pronounced. Preferably, the weakened line has a total film thickness of about one third of the seam thickness.

A second, third, or higher order weakened line can have, and preferably has, the same characteristics analogous to the weakened line as described herein.

The thickness ratio between the seam out of the weakened line and at the weakened line is greater or equal to 3. The thickness can be measured by any adequate means, since such thickness in the micrometer range can be determined with high accuracy by different techniques, as long as the measurement equipment is correctly calibrated. Preferably, the thickness is measured by computer tomography on a pouch produced wherein the chambers are filled with air and no product, obviously without perforations in the chamber. Other exemplary methods are via profilometer, ellipsometry, microscopy of transversal cut.

### Relation of chambers and weakened line, preferred embodiments.

It is generally preferred that the first chamber has a lover density than the second chamber. It is further preferred that the first chamber comprises a liquid product, and the second chamber a solid product. Furthermore, the second chamber with a solid product is preferably 100% filled, for that the chamber may comprise perforations or other means of venting, so that after sealing with the second film, the excess of air can be let out. Perforations are preferred as they can be made in a plurality and being very small so that, e.g., a grain of the granulate cannot escape the chamber. For the second chamber, 100% filled means that there is no air, such as an air bubble, other than the remaining air in the voids between the grains or the powder. The first chamber comprising a liquid may be less than 100% filled with liquid product, such that the remaining volume is occupied by air, this volume of air can be varied to adjust the desired density.

In a particularly preferred embodiment, the first chamber has a density lower than water and the second chamber has a density higher than water. Thus, when in water, the chambers are subject to different Beyoncé forces, and there is a net result force pulling the first and the second chamber apart from each other. This net force helps to accelerate the separation of the chambers in addition to the dissolution of the weakened line in water. This has shown to result in excellent dispersion of the products from the first and the second chamber in the washing and/or cleaning liquor, especially in the washing liquor of a laundry washing machine.

In one further development of the invention, one of the first chamber or the second chamber comprises a concave section, and the other one comprises a convex section, which extends into the concave section. Since the first chamber is attached to the second chamber via the seam area between both (the bridge), the concave section can hold the convex section in place, effectively fixing the position of the first and the second chambers in relation to each other. It is thus possible to obtain a pouch with a first chamber and a second chamber, which is structurally stable, even with the presence of the weakened line. This effect is more pronounced when each of the first and second chambers is itself rigid. Rigid means for a chamber filled with liquid product, that it is filled with product and air such that the first and second films are kept under tension. For a chamber filled with a solid product, rigid means as well that the chamber is filled with product and air such that the first and second films are kept under tension, or if perforated, that the solid product occupied large portion of the chamber in a sufficiently compact manner.

Preferably, the first chamber comprises the concave section and the second chamber comprises the convex section, which extends into the concave section of the first chamber. Alternatively or in addition, it is preferred that the convex and concave sections are geometrically complementary to each other, therefore obtaining best structural stability of the pouch.

The present invention also concerns a method for treating textiles. If a pouch according to the invention is added to water, the product of the first and the second chambers will be delivered to water at different times and/or different places. Preferably, the pouch is subject to forces, such that after dissolution of the weakened line the first chamber and the second chamber are moved away from each other. Alternatively, if one chamber is set to dissolve first, the other chamber, still unbroken can be moved away from the product already released. Overall, it is possible to obtain much faster dispersion of the products into a laundry washing machine.

### Production of the pouch

The pouch can be generally made by know methods, with the addition of the step of making the weakened line. A preferred method comprises:
(i) providing a mould with a first cavity and a second cavity,
(ii) providing a first film over the mould,
(iii) deep drawing the first film into the first cavity of the mould forming an open first chamber and into the second cavity of the mould forming an open second chamber; preferably filling the first chamber and the second chamber with product;
(iv) providing a second film over the, preferably filled, chambers;
(v) a sealing step which comprises joining the second film to the first film in the seam area therefore closing the first chamber and the second chamber. The sealing step is preferably realized such that the resulting seam comprises a first closed path for the first chamber and a second closed path for the second chamber.
In a process step after step (iii), preferably after step (iv), more preferably together with the sealing step, a weakened line is formed in the seam such that at least the first chamber can be separated from second chamber. In the weakened line, the thickness of the superposed first film and second film in the seam is reduced in at least one position between the first chamber and the second chamber. Preferably, the weakened line is in form of a trench in the seam.

In one preferred embodiment, the weakened line surrounds the first chamber and is preferably continuous and uninterrupted. In addition or alternative, a second weakened line surrounds the second chamber and is preferably continuous and uninterrupted. If the weakened line and the second weakened line are present, it is preferred that both, are made the same manner in the same process step.

It is preferred that the first chamber is filled with a liquid product.

The second chamber is preferably filled with a solid product.

In one preferred embodiment of the invention, the second chamber is perforated before being filled. Alternatively, the film, preferably the second film, area that is to be used for the second chamber, is perforated before being placed over the chamber. In another embodiment the second chamber can be perforated after the chamber is being formed.

### Sealing

The sealing can be made by any known method. A preferred methods are a by pressing the first film and the second film together between a tool and a die. The tool can be the outer surface of the mould, this surface is preferably flat, without sharp edges but preferably rounded edges, and optionally with a soft layer such as a rubber layer. The films can be glued or melted together. Melting is preferred and is named herein as heat sealing.

A preferred method of sealing is heat sealing, wherein at least one of the tool and the die, preferably the die, is heated to soften the first film and the second film. The die can be a movable part external to the mould, preferably the surface of the die which is oriented towards the tool is flat and more preferably parallel to the tool. Alternatively or preferably in addition, the surface of the die which is oriented towards the tool has a thermal greater than 1 Wm⁻¹K⁻¹, preferably greater than 10 Wm⁻¹K⁻¹ (at 20°C under normal pressure). This allows for a good heat transfer when the films are sealed together by means of heat sealing. For example, the surface can be made of a metal such as copper or a metal allow such as stainless steel. The surface can be coated with a very thin layer of e.g. a fluorinated polymer, as long as the heat transfer properties are not affected.

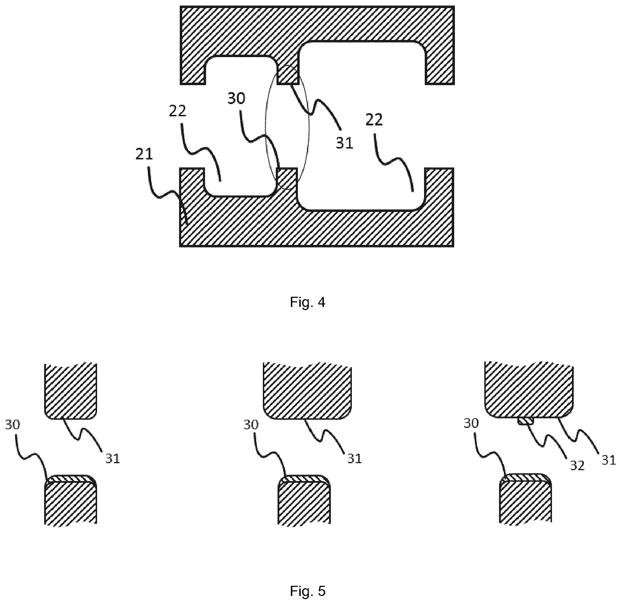

It is preferred that the die's surface conforms to the pouch geometry, such as in Fig. 4. For instance, the die needs to be able to contact the first film in the whole sealing area to form the seam and so that the weakened line is formed as a continuous line. If the complete seam is formed at once, the die may have cavities corresponding to the chambers, such that the die is able to contact the film in the sealing area but does not contact the chamber walls. The die is preferably stamp like.

In an alternative, but less preferred embodiment, the die is a wheel that can be rolled over the films to form the seam, such can be used for instance for straight seams. However, it is preferred that the die is such that the complete seam of the pouch can be formed at once by sealing the first film to the second film. Also, a stamp like dye is preferred for pouches with curved seams, such when one of the first chamber or the second chamber comprises a concave section, and the other one comprises a convex section, which extends into the concave section. Such curved seams can be made easier and in more reliable manner than with a wheel die.

### Forming the Weakened Line

The weakened line can be formed, for instance, by pressing, stamping, or embossing the seam between a tool and a die. The tool can be the outer surface of the mould, this surface is preferably flat, without sharp edges but preferably rounded edges, and optionally with a soft layer such as a rubber layer. The die can be a movable part external to the mould, preferably the surface of the die which is oriented towards the tool is flat.

In one embodiment of the invention, the die comprises a protrusion able to form the trench in the weakened line. While with such a protrusion it is possible to make sure that a weakened line is formed. In another embodiment, the surface of the die which is oriented towards the tool is flat, the weakened line is formed by pressing the films between tool and die, the weakened line is formed due to the the pressure distribution in the film.

In another less preferred embodiment, the weakened line can be formed with a wheel type cutter. The pressure applied to the seam needs to be sufficiently high to create the weakened line but sufficiently low to avoid cutting the film through. However, it is preferred that the die is such that the complete weakened line or lines can be formed at once.

The weakened line is preferably formed in step (iv) at the same time of the sealing, thus the tool and die used for sealing also provide the weakened line. It is more preferred to form the weakened line in step (iv) at the same time of the sealing, using a stamp like die, this provides the most efficient process and the most reliable results.

### Example 1

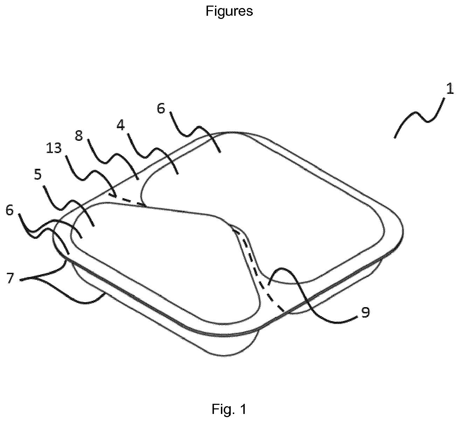

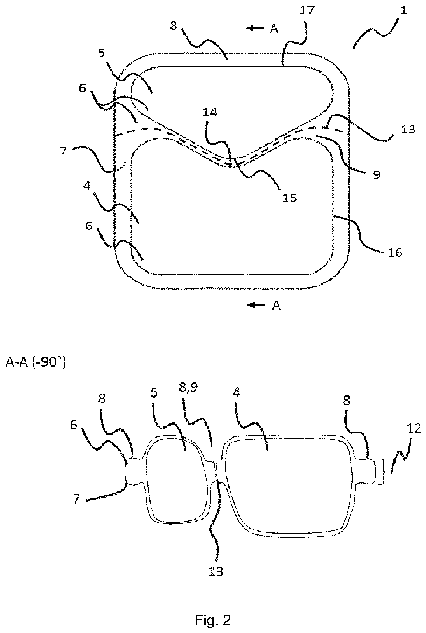

A first film with a thickness of 90micrometers of PVA (specs) is positioned over a mould comprising two cavities as in Fig1. and Fig. 2, the outer base area is 60 mm x 60 mm. The first film is preheated by a contact plate to 100°C. The film is held fixed at the outer mould area (tool surface) and vaccum is applied in the mould through vacuum means present in the mould, thus deep drawing the first film in the mould. The volume of that the cavity which is going to form the first chamber is 18 cm3. The volume of the cavity which is going to form the second chamber is 9 cm3. The mould is transported to a subsequent station, in which the first cavity is filled to 90% of its volume with a liquid product with the formulation F1 below. The second cavity is filled to 90% of its volume with a solid product. In a subsequent station, the second film with same specs ad the first film is drawn over the first film. Thereafter a die having the same form of the mould and heated up to a temperature of 154 °C is pressed over the second film at a pressure of 0,5 N/mm² for 1100 ms. The die has a protruding line at its surface with a height of 30 micrometers, a width of 300 micrometers and a length sufficient to form a line crossing the pouch in the bridge area from one side to another, alternatively the die could have a protruding line able to make a weakened line around the first chamber, and another one around the second chamber. The films melt together and the weakened line is formed by this process at the immediate vicinity of the chamber wall in the seam. The die is removed, the pouch is let cool down for 30 seconds and is the vacuum is broken so that the pouch can be removed from the mould.

### Example 2

A first film with a thickness of 90 micrometers of PVA (specs) is positioned over a mould comprising two cavities as in Fig. 1. and Fig. 2, the outer base area is 60mm x 60mm. The first film is kept at a temperature of 100 °C. The film is held fixed at the outer mould area (tool surface) and vaccum is applied in the mould through vacuum means present in the mould, thus deep drawing the first film in the mould. The volume of that the cavity which is going to form the first chamber is 18 cm3. The volume of the cavity which is going to form the second chamber is 9 cm3. The mould is transported to a subsequent station, in which the first cavity is filled to 90% of its volume with a liquid product with the formulation F1 below. The second cavity is filled to 90% of its volume with a powder granulate. In a subsequent station, the second film with same specs ad the first film is drawn over the first film. Thereafter a die having the same form of the mould and heated up to a temperature of 154 °C is pressed over the second film at a pressure of 1 N/mm² a for 1100 ms. The films melt together and the weakened line is formed by this process at the immediate vicinity of the chamber wall in the seam. In this example, the time is adjusted such that heated film flows by itself into two directions, between the die and the tool, and to the chamber wall (here the film is pulled by remaining tension from the deep drawing), thus the weakened line is formed by this process around the chamber. The die is removed, the pouch is let cool down for 30 seconds and is the vacuum is broken so that the pouch can be removed from the mould.

### Final Thicknesses and Solubility Test

The final thickness achieved by this method in the area of the seam is approximately 100 micrometers of (seam thickness), and about 45 micrometers of thickness of the weakened line. A solubility test was made for a pouch with a first chamber comprising liquid product and a second chamber comprising a granulate and small perforations in the top film. The pouch was placed in a cup with 200 ml of water at 20°C. The second chamber released its content at about 7 s, starting to release the granulate, the chambers were separated from each other after about 18 s. Surprisingly, even after 107 s in water, the first chamber, separated from the rest of the pouch due to the dissolution of the weakened line, was still intact. Similar results could be reproduced with larger or smaller amounts of water, or using light agitation. Similar tests done with pouches comprising liquid product in the first chamber and liquid product in the second chamber. The result was that the first chamber and the second chamber were separated but still intact after in water for 15s, and 3 even longer, releasing its content after about 60 s.

### Comparative Example

A comparative example was made by producing a pouch as in example 2 but wherein the seam did not comprise a weakened line. The pouch was produced as in the example 2 with the difference that the sealing was done by pressing the die over the second film at a pressure of 0,5 N/mm² for 1100 ms. In the solubility test, when no weakened line is available, the chambers are still connected to the pouch when they break releasing the product. Thus, the product of the first chamber and of the second chamber are released in the proximity of the pouch. Consequently immediate physical or chemical interaction cannot be avoided, for instance, the liquid of the frist chamber can coat the particles of the product of the second chamber so that the solubility of the particles is slowed down.

The invention will be further with the following embodiments and figures. The figures show in:
Fig 1, a pouch (1) in perspective view, with a weakened line (9);
Fig. 2, a pouch (1) in top view on the first film (6) side, with a weakened line (9), and the cross section cut A-A;
Fig. 3, a pouch (1) in top view on the first film (6) side, with a weakened line (9) and an additional weakened line (29), and the cross section cut B-B.
Fig. 4 shows a mould (22), its lateral surface forming the tool and the die for sealing. The tool and die are preferably also used for creating the weakened line.
Fig.5 shows details of the tool (30) and die surfaces (31) and variants thereof.

Figure 1 shows a pouch (1) according to the present invention, in perspective view. Figure 2 shows the same pouch as Fig.1, in top view, i.e., by looking onto first film (6). The pouch comprises a first film (6) and a second film (7) overlapping with the first film (6). The first film (6) and the second film (7) are joined together forming a seam (8). The pouch (1) comprises a first chamber (4) and a second chamber (5). The bridge (9) between the chambers (4, 5) is part of the seam (8). The seam (8) comprises a first closed path (16, refer to Fig. 2) and a second closed path (17, refer to Fig. 2), which, in this example, are both right adjacent to the respective chamber wall. The space between the first film (6) and the second film (7) delimited by the first closed path (16) defines a first chamber (4) for holding product. The space between the first film (6) and the second film (7) delimited by the second closed path (17) defines a second chamber (5) for holding product.

The seam of the pouch of figures 1 and 2 comprises a weakened line (9) dividing the pouch in on side with the first chamber (4) and into another side with the second chamber (5). The weakened line is shown as a dashed line because such is easier to show in the figure; nevertheless, it is highly preferred throughout the invention, that the weakened line is continuous and uninterrupted.

The thickness of the weakened line (13) is less than the thickness of each of the first film (6) and the second film (7) combined, so that the weakened line (13) dissolves first when in contact with water, separating the first chamber (4) from the second chamber.

In the top view in Fig. 2, it can be seen that the first chamber (4) comprises a concave section (14), and the second chamber (5) comprises a convex section (15), which extends into the concave section (14). Incidentally, this view is the same as the plan view in the film plane (base area). Since the first chamber (4) is attached to the second chamber (5) via the bridge (9), the concave section (14) can hold the convex section (15) in place, effectively fixing the position of the first and the second chambers in relation to each other. For best structural stability, it is preferred that the convex and concave sections are geometrically complementary to each other.

Cross-section A-A shows a cut from the pouch of Fig.2 on line A-A, rotated by -90°. The film thicknesses are exaggerated in the seam region, in relation to the chamber wall and to the pouch size itself, for improving the clarity of the drawing, thus it is not on scale.

In the cross sectional view A-A, the second chamber (5) can be seen on the right side connected to the first chamber (4) via the bridge (9). The seam (8) is shown and the sum 12 of thickness of the first film and second film in the seam (12). The thickness (12) of the seam (8) is the thickness of the first and second film joined together after the sealing process step, which is typically less than the sum of the nominal thicknesses of the first film and second film before the sealing process step. For example the first film (6) and the second film (7) can each have a thickness of 100µm when delivered, usually in a roll. Then the superposed films in the seam area, before the seam is formed, have a total thickness of 200µm, after joining the films together, for example by heating and pressing them together melt-joining them, the final thickness, which is the thickness of the seam (12), may be 150µm, due to the applied pressure. In the present example in Figure 2, the weakened line (13) has a trench form and divides the pouch in a part with the first chamber (4) and a part with the second chamber (5). The trench is shown on both sides of the seam, but can be formed on one side as well, it can also be less pronounced as shown, as long as the film has this thinner region. The weakened line (13) has a total film thickness of about one third of the seam thickness (12).

Obviously, the wall of the chamber may be thinner than the film thickness (as delivered), for example due to a thinning caused by deep drawing.

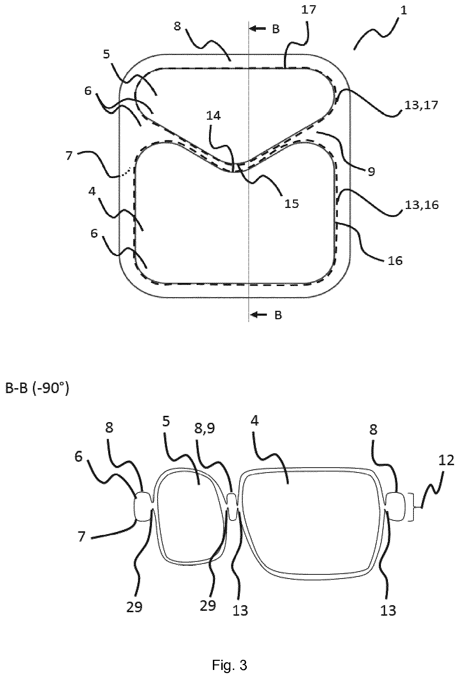

Figure 3 shows a similar pouch (1) as in figure 2 but with a different configuration of the weakened line. In figure 3, the pouch (1) comprises a weakened line (13) circumventing the first chamber (4), and a second weakened line (29) circumventing the second chamber (5).

The cross sectional cut can B-B is also shown in figure 3, it is rotated by -90°. The film thicknesses are exaggerated in the seam region, in relation to the chamber wall and to the pouch size itself, for improving the clarity of the drawing, thus it is not on scale.

In the cross-sectional view B-B, the second chamber (5) can be seen on the right side connected to the first chamber (4) via the bridge (9). The seam (8) is shown and the sum 12 of thickness of the first film and second film in the seam (12). The thickness (12) of the seam (8) is the thickness of the first and second film joined together after the sealing process step, which is typically less than the sum of the nominal thicknesses of the first film and second film before the sealing process step. For example the first film (6) and the second film (7) can each have a thickness of 100µm when delivered, usually in a roll. Then the superposed films in the seam area, before the seam is formed, have a total thickness of 200µm, after joining the films together, for example by heating and pressing them together melt-joining them, the final thickness, which is the thickness of the seam (12), may be 150µm, due to the applied pressure. In the present example in Figure 3, the weakened line (13) has a trench form circumventing the first chamber (4). The trench is shown on both sides of the seam, but can be formed on one side as well, it can also be less pronounced as shown, as long as the film has this thinner region. A second weakened line (29) has the same trench form and circumvents the second chamber (5). Each of the weakened line (13) and the second weakened line (29) has a total film thickness of about one third of the seam thickness (12).

Fig. 4 shows a mould (22), its lateral surface forming the tool and the die for sealing. The tool and die are preferably also used for creating the weakened line. The lower part is a cross-section cut of the mould (21) with a first and a second cavity (22). The surface (30) of the mould at the side of the cavity forms the tool for sealing. This tool is preferably also the tool for creating the weakened line. The upper part of the figure is a cross section view of the die (31), the die's surface matches to the tool's surface to create the seam.

Fig.5 shows details of the tool (30) and die surfaces (31) and variants thereof. On the left side, it is shown the tool (30) with a surface layer and its rounded edges, over the tool, the die (31) is shown with rounded edges and same size as the tool. In the middle figure the die (31) is larger than the tool (30), this is advantageous to avoid alignment errors, so that the seam is always formed between two parallel surfaces. In the figure on the right side, the die has a protrusion (32), which is shown in an exaggerate scale, this protrusion is used to create the weakened line according to the invention.

Unless otherwise provided, all parameters given are under normal conditions, for instance a temperature of 20°C and ambient pressure of 1 atm.

### List of reference Numbers

- 1: pouch
- 3: product
- 4: first chamber
- 5: second chamber
- 6: first film
- 7: second film
- 8: seam
- 9: bridge
- 10: thickness of first film
- 11: thickness of second film
- 12: sum of thicknesses of first film and second film at the seam after sealing
- 13: weakened line
- 14: concave section of first chamber
- 15: convex section of second chamber
- 16: first closed path
- 17: second closed path
- 18: thickness of the weakened line
- 20: conveyer belt
- 21: mould
- 22: cavity
- 23: first cavity
- 24: second cavity
- 26: means for sealing
- 28: superposed first film and second film
- 29: second weakened line
- 30: liquid product
- 31: solid product
- 30: tool surface
- 31: die
- 32: protrusion

## Claims

1. Water soluble pouch (1) comprising:
(i) a first film (6);
(ii) a second film (7) overlapping with the first film (6);
(iii) a seam (8) in which the first film (6) is joined to the second film (7),
wherein the seam (8) comprises a first closed path (16) within which space between the first film (6) and the second film (7) defines a first chamber (4) for holding product (3);
and wherein the seam (8) comprises a second closed path (17) within which space between the first film (6) and the second film (7) defines a second chamber (5) for holding product (3);
**characterized in that**
the seam (8) comprises a weakened line (13); and the thickness of the weakened line (13) is less than the thickness of each of the first film (6) and the second film (7) combined so that the weakened line (13) dissolves first when in contact with water, separating the first chamber (4) from the second chamber.

2. Water soluble pouch according to one of the previous claims, wherein at least the first closed path (16) comprises a weakened line, so that the first chamber (4) can be completely separated from the seam (8) when in contact with water.

3. Water soluble pouch according to one of the previous claims, wherein the second closed path (17) comprises a second weakened line, so that the second chamber (5) can be completely separated from the seam (8) when in contact with water.

4. Water soluble pouch according to one of the previous claims, wherein the weakened line (13) is continuous and uninterrupted.

5. Water soluble pouch according to one of the previous claims, wherein the thickness ratio between the seam (8) out of the weakened line (13) and at the weakened line (13) is greater or equal to 3 as measured by computer tomography.

6. Water soluble pouch according to one of the previous claims, wherein the second chamber (5) has a higher density than the first chamber.

7. Water soluble pouch according to one of the previous claims, wherein the second chamber (5) has a density higher than water.

8. Water soluble pouch according to one of the previous claims, wherein the first chamber (4) has a lower density than water.

9. Water soluble pouch according to one of the previous claims, wherein the second chamber (5) is perforated and comprises a powder which is not able to flow out of the perforations.

10. Water soluble pouch according to one of the previous claims, wherein one of the first chamber (4) or the second chamber (5), comprises a concave section, and the other one comprises a convex section which extends into the concave section.

11. Water soluble pouch according to one of the previous claims, wherein the second chamber (5) comprises a product in the form of a solid composition comprising related to the total weight of said solid composition a total amount of 0 to 5 wt.% surfactant.

12. Water soluble pouch according to one of the previous claims, wherein the second chamber (5) comprises a product in the form of a solid composition, comprising related to the total weight of said solid composition
- a total amount of 25 to 55 wt.-% of at least one peroxide compound,
- a total amount of 2 to 25 wt.-% of at least one organic bleach activator.

13. Water soluble pouch according to claim 12, wherein the solid composition comprises above defined total amounts of at least one inorganic peroxide compound.

14. Water soluble pouch according to claims 12 or 13, wherein the at least one organic bleach activator is selected from at least one compound, which is capable of forming via perhydrolysis an aliphatic percarboxylic acid (especially selected from at least one N-acylated organic amine).

15. Water soluble pouch according to one of the previous claims, wherein the first chamber (4) comprises a product in the form of a liquid composition, comprising related to the total weight of said liquid composition
- a total amount of 25 to 60 wt.-% of at least one anionic surfactant and
- a total amount of 2 to 35 wt.-% of at least one nonionic surfactant.

16. Water soluble pouch according to one of the previous claims, wherein one of the first chamber (4) or the second chamber (5), comprises a concave section, and the other one comprises a convex section which extends into the concave section.

17. Method for treating textiles with a pouch (1) according to any of the previous claims.

## Patentansprüche

1. Wasserlöslicher Beutel (1), Folgendes umfassend:
(i) eine erste Folie (6);
(ii) eine zweite Folie (7), die mit der ersten Folie (6) überlappt;
(iii) eine Naht (8), in der die erste Folie (6) mit der zweiten Folie (7) verbunden ist,
wobei die Naht (8) einen ersten geschlossenen Pfad (16) umfasst, in dem ein Abstand zwischen der ersten Folie (6) und der zweiten Folie (7) eine erste Kammer (4) zum Halten eines Produkts (3) definiert;
und wobei die Naht (8) einen zweiten geschlossenen Pfad (17) umfasst, in dem ein Abstand zwischen der ersten Folie (6) und der zweiten Folie (7) eine zweite Kammer (5) zum Halten eines Produkts (3) definiert;
**dadurch gekennzeichnet, dass**
die Naht (8) eine geschwächte Linie (13) umfasst; und die Dicke der geschwächten Linie (13) geringer ist als die Dicke jeder der ersten Folie (6) und der zweiten Folie (7) zusammen, sodass die geschwächte Linie (13) sich beim Berühren mit Wasser zuerst auflöst, wodurch die erste Kammer (4) von der zweiten Kammer getrennt wird.

2. Wasserlöslicher Beutel nach einem der vorhergehenden Ansprüche, wobei wenigstens der erste geschlossene Pfad (16) eine geschwächte Linie umfasst, sodass die erste Kammer (4) beim Berühren mit Wasser vollständig von der Naht (8) getrennt sein kann.

3. Wasserlöslicher Beutel nach einem der vorhergehenden Ansprüche, wobei der zweite geschlossene Pfad (17) eine zweite geschwächte Linie umfasst, sodass die zweite Kammer (5) beim Berühren mit Wasser vollständig von der Naht (8) getrennt sein kann.

4. Wasserlöslicher Beutel nach einem der vorhergehenden Ansprüche, wobei die geschwächte Linie (13) durchgehend und ununterbrochen ist.

5. Wasserlöslicher Beutel nach einem der vorhergehenden Ansprüche, wobei das Dickenverhältnis zwischen der Naht (8) außerhalb der geschwächten Linie (13) und an der geschwächten Linie (13) größer als oder gleich 3 ist, gemessen durch Computertomographie.

6. Wasserlöslicher Beutel nach einem der vorhergehenden Ansprüche, wobei die zweite Kammer (5) eine höhere Dichte aufweist als die erste Kammer.

7. Wasserlöslicher Beutel nach einem der vorhergehenden Ansprüche, wobei die zweite Kammer (5) eine höhere Dichte aufweist als Wasser.

8. Wasserlöslicher Beutel nach einem der vorhergehenden Ansprüche, wobei die erste Kammer (4) eine geringere Dichte aufweist als Wasser.

9. Wasserlöslicher Beutel nach einem der vorhergehenden Ansprüche, wobei die zweite Kammer (5) perforiert ist und ein Pulver umfasst, das nicht aus den Perforationen hinausfließen kann.

10. Wasserlöslicher Beutel nach einem der vorhergehenden Ansprüche, wobei eine der ersten Kammer (4) und der zweiten Kammer (5) einen konkaven Abschnitt umfasst und die andere einen konvexen Abschnitt umfasst, der sich in den konkaven Abschnitt erstreckt.

11. Wasserlöslicher Beutel nach einem der vorhergehenden Ansprüche, wobei die zweite Kammer (5) ein Produkt in der Form einer Feststoffzusammensetzung umfasst, bezogen auf das Gesamtgewicht der Feststoffzusammensetzung eine Gesamtmenge von 0 bis 5 Gew.-% Tensid umfassend.

12. Wasserlöslicher Beutel nach einem der vorhergehenden Ansprüche, wobei die zweite Kammer (5) ein Produkt in der Form einer Feststoffzusammensetzung umfasst, bezogen auf das Gesamtgewicht der Feststoffzusammensetzung Folgendes umfassend:
- eine Gesamtmenge von 25 bis 55 Gew.-% wenigstens einer Peroxidverbindung,
- eine Gesamtmenge von 2 bis 25 Gew.-% wenigstens eines organischen Bleichaktivators.

13. Wasserlöslicher Beutel nach Anspruch 12, wobei die Feststoffzusammensetzung die oben definierten Mengen wenigstens einer anorganischen Peroxidverbindung umfasst.

14. Wasserlöslicher Beutel nach Anspruch 12 oder 13, wobei der wenigstens eine organische Bleichaktivator ausgewählt ist aus wenigstens einer Verbindung, die in der Lage ist, über Perhydrolyse eine aliphatische Percarbonsäure (insbesondere ausgewählt aus wenigstens einem N-acylierten organischen Amin) auszubilden.

15. Wasserlöslicher Beutel nach einem der vorhergehenden Ansprüche, wobei die erste Kammer (4) ein Produkt in der Form einer Flüssigzusammensetzung umfasst, bezogen auf das Gesamtgewicht der Flüssigzusammensetzung Folgendes umfassend:
- eine Gesamtmenge von 25 bis 60 Gew.-% wenigstens eines anionischen Tensids und
- eine Gesamtmenge von 2 bis 35 Gew.-% wenigstens eines nichtionischen Tensids.

16. Wasserlöslicher Beutel nach einem der vorhergehenden Ansprüche, wobei eine der ersten Kammer (4) und der zweiten Kammer (5) einen konkaven Abschnitt umfasst und die andere einen konvexen Abschnitt umfasst, der sich in den konkaven Abschnitt erstreckt.

17. Verfahren zum Behandeln von Textilien mit einem Beutel (1) nach einem der vorhergehenden Ansprüche.

## Revendications

1. Poche hydrosoluble (1) comprenant :
(i) un premier film (6) ;
(ii) un second film (7) qui chevauche le premier film (6) ;
(iii) une couture (8) dans laquelle le premier film (6) est joint au second film (7),
dans laquelle la couture (8) comprend un premier chemin fermé (16) dans lequel l'espace entre le premier film (6) et le second film (7) forme une première chambre (4) pour retenir le produit (3) ;
et dans laquelle la couture (8) comprend un second chemin fermé (17) dans lequel l'espace entre le premier film (6) et le second film (7) forme une seconde chambre (5) pour retenir le produit (3) ; **caractérisée en ce que**
la couture (8) comprend une ligne d'affaiblissement (13) ; et l'épaisseur de la ligne d'affaiblissement (13) est inférieure à l'épaisseur de chacun du premier film (6) et du second film (7) combinés de sorte que la ligne d'affaiblissement (13) se dissout d'abord lorsqu'elle est en contact avec l'eau, en séparant la première chambre (4) de la seconde chambre.

2. Poche hydrosoluble selon l'une quelconque des revendications précédentes, dans laquelle au moins le premier chemin fermé (16) comprend une ligne d'affaiblissement, de telle sorte que la première chambre (4) peut être complètement séparée de la couture (8) lorsqu'elle est en contact avec l'eau.

3. Poche hydrosoluble selon l'une quelconque des revendications précédentes, dans laquelle le second chemin fermé (17) comprend une seconde ligne d'affaiblissement, de telle sorte que la seconde chambre (5) peut être complètement séparée de la couture (8) lorsqu'elle est en contact avec m'eau.

4. Poche hydrosoluble selon l'une quelconque des revendications précédentes, dans laquelle la ligne d'affaiblissement (13) est continue et ininterrompue.

5. Poche hydrosoluble selon l'une quelconque des revendications précédentes, dans laquelle le rapport d'épaisseur entre la couture (8) en dehors de la ligne d'affaiblissement (13) et au niveau de la ligne d'affaiblissement (13) est supérieur ou égal à 3 tel que mesuré par tomodensitométrie.

6. Poche hydrosoluble selon l'une quelconque des revendications précédentes, dans laquelle la seconde chambre (5) a une densité supérieure à celle de la première chambre.

7. Poche hydrosoluble selon l'une quelconque des revendications précédentes, dans laquelle la seconde chambre (5) a une densité supérieure à celle de l'eau.

8. Poche hydrosoluble selon l'une quelconque des revendications précédentes, dans laquelle la première chambre (4) a une densité inférieure à celle de l'eau.

9. Poche hydrosoluble selon l'une quelconque des revendications précédentes, dans laquelle la seconde chambre (5) est perforée et comprend une poudre qui ne peut pas s'écouler hors des perforations.

10. Poche hydrosoluble selon l'une quelconque des revendications précédentes, dans laquelle l'une de la première chambre (4) ou de la seconde chambre (5) comprend une section concave et l'autre comprend une section convexe qui s'étend à l'intérieur de la section concave.

11. Poche hydrosoluble selon l'une quelconque des revendications précédentes, dans laquelle la seconde chambre (5) comprend un produit sous la forme d'une composition solide comprenant en ce qui concerne le poids total de ladite composition solide une quantité totale de tensioactif de 0 à 5 % en poids.

12. Poche hydrosoluble selon l'une quelconque des revendications précédentes, dans laquelle la seconde chambre (5) comprend un produit sous la forme d'une composition solide comprenant en ce qui concerne le poids total de ladite composition solide
- une quantité totale de 25 à 55 % en poids d'au moins un composé peroxyde,
- une quantité totale de 2 à 25 % en poids d'au moins un activateur de blanchiment organique.

13. Poche hydrosoluble selon la revendication 12, dans laquelle la composition solide comprend les quantités totales définies ci-dessus d'au moins un composé peroxyde inorganique.

14. Poche hydrosoluble selon les revendications 12 ou 13, dans laquelle l'au moins un activateur de blanchiment organique est sélectionné à partir d'au moins un composé, qui est capable de former à travers la perhydrolyse un acide percarboxylique aliphatique (notamment sélectionné à partir d'une amine organique N-acylée).

15. Poche hydrosoluble l'une quelconque des revendications précédentes, dans laquelle la première chambre (4) comprend un produit sous la forme d'une composition liquide, comprenant en ce qui concerne le poids total de ladite composition liquide
- une quantité totale de 25 à 60 % en poids d'au moins un tensioactif anionique et
- une quantité totale de 2 à 35 % en poids d'au moins un tensioactif non ionique.

16. Poche hydrosoluble selon l'une quelconque des revendications précédentes, dans laquelle l'une de la première chambre (4) ou de la seconde chambre (5) comprend une section concave et l'autre comprend une section convexe qui s'étend à l'intérieur de la section concave.

17. Procédé de traitement de textiles avec une poche (1) selon l'une quelconque des revendications précédentes.
